(19)

**Europäisches Patentamt**
**European Patent Office**
**Office européen des brevets**

(11) **EP 3 364 211 B1**

(12) **EUROPEAN PATENT SPECIFICATION**

(45) Date of publication and mention
of the grant of the patent:
**17.08.2022  Bulletin 2022/33**

(21) Application number: **17465504.3**

(22) Date of filing: **21.02.2017**

(51) International Patent Classification (IPC):
**G01S 13/72** *(2006.01)*      **G01S 13/93** *(2020.01)*
**B60W 30/095** *(2012.01)*      **G01S 13/931** *(2020.01)*

(52) Cooperative Patent Classification (CPC):
**G01S 13/931; B60W 30/095; G01S 13/723;**
G01S 2013/932; G01S 2013/93271

(54) **METHOD AND DEVICE FOR DETECTING A POSSIBLE COLLISION, AND VEHICLE**

VERFAHREN UND VORRICHTUNG ZUR ERFASSEN EINER MÖGLICHEN KOLLISION UND FAHRZEUG

PROCÉDÉ ET DISPOSITIF POUR DÉTECTER UNE COLLISION POSSIBLE ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.08.2018  Bulletin 2018/34**

(73) Proprietor: **Continental Autonomous Mobility Germany GmbH**
**85057 Ingolstadt (DE)**

(72) Inventors:
• **Sasu, Robert**
**525200 Covasna (RO)**
• **Olaru, Ion Marian**
**555300 Cisnadie (RO)**

(74) Representative: **Continental Corporation**
**c/o Continental Automotive GmbH**
**Intellectual Property**
**Nordostpark 30**
**90411 Nürnberg (DE)**

(56) References cited:
JP-A- 2008 222 164     US-A1- 2002 044 081
US-A1- 2003 220 728     US-A1- 2012 313 806
US-A1- 2015 183 431     US-A1- 2016 039 413
US-A1- 2016 101 779     US-B1- 6 615 138

**Description**

The invention relates to a method and a device for detecting a possible collision of a vehicle with a moving object. The invention further relates to a vehicle.

For autonomous or semi-autonomous driving, it is crucial that possible collisions are already detected well in advance. Various different sensor systems may be used to determine possible collision with another vehicle. For instance, document WO 2013/121357 A1 discloses to determine a time to collision using a camera. Also widely used are radar signals in order to determine the distance to objects within a surrounding of the vehicle. These measurements are particularly useful for parking assistance. However, if an object is moving, it is often difficult to determine if the object will eventually collide with the vehicle or will pass by the vehicle. In radar systems, the measurement of the object includes a lot of background noise. Accordingly, there is a variance of the position and of the speed of the object which is difficult to be taken into account. It may sometimes occur that a collision with the vehicle is erroneously detected.

US 2003/220728 A1 relates to a remote, non-contact sensing based pre-crash threat assessment system using a generalized conic target path prediction methodology.

US 2002/044081 A1 relates to a radar system generating a plurality of data points representative of the position of a tracked object, and a representation of an associated path is formed thereon.

US 6 615 138 B1 relates to a collision detection system and method of estimating a miss distance of an object. The collision detection system includes a sensor for sensing an object within a field of view and measuring range and range rate of the sensed object.

JP 2008 222164 A relates to course prediction device and collision prediction device to enhance course predicting accuracy on the other vehicle by a RANSAC method.

US 2016/101779 A1 relates to a movement trajectory predicting device for accurately predicting a movement trajectory of an object from a history of positions of the object even in a case where shaking deflection of a vehicle occurs.

US 2012/313806 A1 relates to an object detecting apparatus and method for detecting an object on the basis of information acquired by a radar and an image sensor.

US 2015/0183431 A1 relates to a collision predicting apparatus including sensors that obtain positional information.

US 2016/039413 A1 relates to a method for determining a lane course of a lane with the aid of a multiplicity of recorded routes using a compensation curve.

Accordingly, it is an object of the present invention to increase the precision for detecting possible collisions with moving objects.

In accordance with the invention, a method for detecting a possible collision of a vehicle with a moving object as recited in claim 1 is provided. The invention further provides a device for detecting a possible collision of a vehicle with a moving object as recited in claim 10. Further, a vehicle as recited in claim 13 is provided.

According to a first aspect, the invention therefore provides a method for detecting a possible collision of a vehicle with a moving object. Spatial positions of the object are determined for a series of time points based on sensor data obtained by the vehicle. An approximated trajectory of the object is constructed by approximating the spatial positions of the object. A possible collision of the vehicle with the object is predicted based on the approximated trajectory of the object and/or based on a time dependence of the approximated trajectory of the object.

According to a second aspect, a device for detecting a possible collision of a vehicle with a moving object is provided, which comprises an interface and an evaluation unit. The interface is adapted to receive sensor data obtained by the vehicle. The evaluation unit is adapted to determine spatial positions of the object for a series of time points based on the received sensor data. The evaluation unit is further adapted to construct an approximated trajectory of the object by approximating the spatial positions of the object. The evaluation unit further predicts a possible collision of the vehicle with the object based on the approximated trajectory of the object and/or based on a time dependence of the approximated trajectory of the object.

According to a third aspect, the invention provides a vehicle comprising a sensor system adapted to provide sensor data of a surrounding of the vehicle, and a device for predicting a possible collision of the vehicle with a moving object based on the provided sensor data.

According to the invention, the spatial positions of the object, i.e., the exact absolute coordinates of the object, are used in order to determine the course or trajectory of the object. Therefore, the movement of the object is detected over a certain period of time which helps to improve predicting the future location of the object relative to the vehicle. In this way, a possible collision can be determined with a higher precision. The moving object can for example be a further vehicle, a motorcycle or a pedestrian.

According to the invention, a possible collision of the vehicle with the object is predicted based on a curvature of the approximated trajectory of the object. The prediction of the possible collision can depend on a specific situation. For example, it may be detected that the vehicle drives towards a roundabout. In this case, the curvature can be used to determine if the moving object is exiting the roundabout, stays in the roundabout, or is heading towards the vehicle.

For example, if the curvature is zero or if the absolute value of the curvature is smaller than a predetermined value, the object is moving essentially along a straight line. In this case, the object will eventually cross the trajectory of the vehicle and a collision is predicted. On the other hand, if the absolute value of the curvature is larger than a predetermined value, no collision is predicted. Depending on the sign of the curvature, it is determined that the object is either exiting the roundabout or is staying in the roundabout.

According to a preferred embodiment of the method, the approximated trajectory is constructed by computing smoothed positions by smoothing the spatial positions of the object, and by constructing the approximated trajectory as an interpolated curve for the smoothed positions using De Boor's algorithm.

According to a preferred embodiment of the method, smoothing the spatial position is performed using a Savitzky-Golay filter.

According to a preferred embodiment of the method, the approximated trajectory is constructed using polynomial regression. For example, the approximated trajectory can be constructed by fitting a third order polynomial.

According to a preferred embodiment of the method, the approximated trajectory is constructed as a regression line through the spatial positions. A possible collision of the vehicle with the objects is predicted based on the time-dependence of a slope of the regression line. Accordingly, it is determined how the slope changes over time in order to find out if the object is moving straight ahead or if the object is moving along a bent curve.

According to a preferred embodiment of the method, a time to collision is determined based on the sensor data, wherein the time to collision is modified based on the approximated trajectory and/or based on the time dependence of the approximated trajectory. For example, depending on how likely a collision of the vehicle with the object is, based on the approximated trajectory and/or based on the time dependence of the approximated trajectory, the time to collision is adjusted accordingly. Therefore, the invention helps to prevent unnecessary breaking maneuvers which could occur due to wrong predictions based on the sensor data.

According to a preferred embodiment of the method, modifying the time to collision comprises multiplying the time to collision by an exponential factor involving a curvature of the approximated trajectory, if the curvature of the approximated trajectory lies within a predetermined interval. The predetermined interval may also depend on a specific situation. For example, if the vehicle is driving towards a roundabout and the object is identified within the roundabout, the time to collision may be reduced if the absolute value of the curvature is larger than a predetermined value. In such a case, the vehicle is exiting the roundabout or stays within the roundabout and there is no collision danger. In contrast, if the absolute value of the curvature is smaller than a predetermined value, the time to collision is left unchanged because the object moving is driving straight and a collision with the vehicle is likely.

According to a preferred embodiment of the method, a probability for a collision of the vehicle with a moving object is computed based on the approximated trajectory and/or based on a time dependence of the approximated trajectory. For example, the probability may depend on the absolute value of the curvature of the approximated trajectory.

According to a preferred embodiment of the method, a movement of the vehicle is controlled if a possible collision of the vehicle with the object has been predicted. For example, the vehicle may be slowed down or the vehicle may be steered away from the trajectory of the object.

According to a preferred embodiment of the device, the evaluation unit is adapted to construct the approximated trajectory using polynomial regression.

According to a preferred embodiment of the device, the evaluation unit is further adapted to determine a time to collision based on the sensor data and is adapted to modify the time to collision based on the approximated trajectory.

According to a preferred embodiment, the vehicle comprises a control unit which is adapted to control a movement of the vehicle if a possible collision of the vehicle with an object has been predicted.

For a more complete understanding of the invention and the advantages thereof, exemplary embodiments of the invention are explained in more detail in the following description with reference to the accompanying drawing figures, in which like reference characters designate like parts and in which:

Fig. 1    shows a schematic block diagram of a device for detecting a possible collision of a vehicle with a moving object according to an embodiment of the invention;

Fig. 2    shows a schematic top view on a road scenario for illustrating the construction of an approximated trajectory according to an embodiment of the invention;

Fig. 3    shows an illustration of a possible scenario where the trajectory of the object has a component parallel to the trajectory of the vehicle and the trajectory of the object bends away from the trajectory of the vehicle;

Fig. 4    shows an illustration of a possible scenario where the trajectory of the object has a component parallel to the trajectory of the vehicle and the trajectory of the object bends towards the trajectory of the vehicle;

Fig. 5    shows an illustration of a possible scenario where the trajectory of the object has a component anti-parallel to the trajectory of the vehicle and the trajectory of the object bends away from the trajectory of the vehicle;

Fig. 6    shows an illustration of a possible scenario where the trajectory of the object has a component anti-parallel to the trajectory of the vehicle and the trajectory of the object bends towards the trajectory of the vehicle;

Fig. 7    shows an illustration of a construction of an approximated trajectory;

Fig. 8    shows an illustration of the time dependence of a slope of a regression line through the spatial positions of the object, wherein the trajectory of the object is bent away from the current position of the vehicle;

Fig. 9    shows a top view on a possible scenario where the object is moving in a roundabout;

Fig. 10    shows an illustration of the time dependence of the slope of a regression line through the spatial positions of the object, where the object is bent towards the current position of the vehicle;

Fig. 11    shows a top view on a further possible scenario where the object is moving in a roundabout;

Fig. 12    shows a schematic block diagram of a vehicle according to an embodiment of the invention; and

Fig. 13    shows a flowchart of a method for detecting a possible collision of the vehicle with a moving object.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

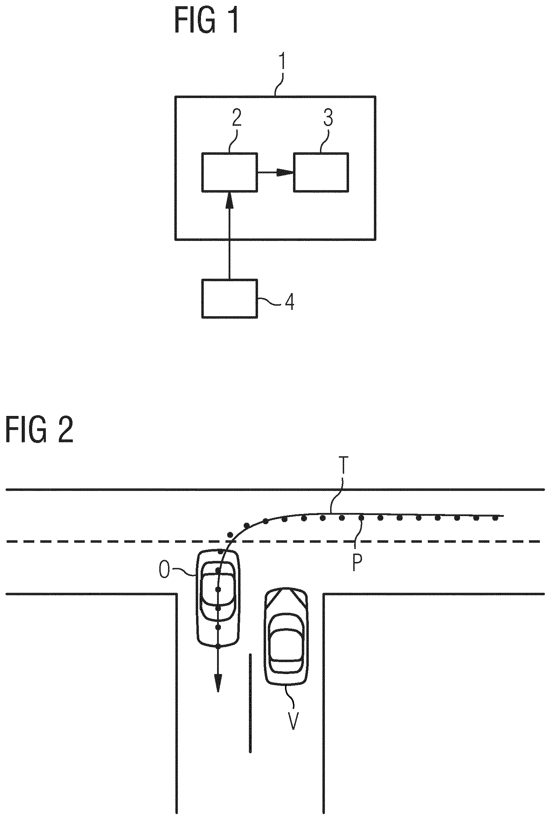

Figure 1 shows a block diagram of a device 1 for detecting a possible collision of a vehicle V with a moving object O. A possible scenario is illustrated in figure 2, where the vehicle V is driving towards a junction and the object O is another vehicle which is turning from the crossing road into the road of the vehicle V.

The device 1 comprises an interface 2 which is adapted to receive sensor data obtained by the vehicle V. The sensor data may comprise radar data obtained by a radar system of the vehicle V, may comprise camera data obtained by a camera system of the vehicle V and/or may comprise infrared data obtained by an infrared sensor of the vehicle V.

The device 1 further comprises an evaluation unit 3 which is adapted to determine spatial positions p of the object O for a series of time points based on the sensor data received via the interface 2. The spatial positions p refer to coordinates of the vehicle V relative to the fixed surrounding of the vehicle V, i.e., to absolute coordinates. The spatial positions p may comprise two-dimensional or three-dimensional coordinates of the object O. Preferably, the evaluation unit 3 is adapted to determine a set of spatial positions p, the set having a predetermined number of elements, for example 25 elements. The spatial positions p are recursively replaced using a first-in first-out principle.

For example, the relative spatial positions of the object O relative to the vehicle V can be determined in a first step. Further, the movement of the vehicle V is added in order to determine the spatial positions p of the object O.

The evaluation unit 3 is further adapted to construct an approximated trajectory T of the object O by approximating the spatial positions p of the object O.

According to an embodiment, the evaluation unit 3 is adapted to construct the approximated trajectory T using polynomial regression. As shown in figure 2, the evaluation unit 3 may construct the approximated trajectory T by using a third order polynomial which is fitted to the spatial positions p of the object O. Preferably, the polynomial is fitted in such a way that the least-square error is minimized.

The curvature of the approximated trajectory T is computed. Based on the curvature, the evaluation unit 3 can determine if the object O is moving in a straight line or is turning left or right. A possible collision of the vehicle V with a moving object O can be determined based on the curvature of the approximated trajectory T. For example, if the approximated trajectory T bends towards the trajectory of the vehicle V, a possible collision is predicted.

According to another embodiment, the last N positions p of the object O are determined and are saved in a list $\{p_0, p_1, ..., p_{N-1}\}$, where N can be any predetermined number, for example N=25. Based on the spatial positions p of the object O, smoothed positions $\{S_0, S_1, ..., S_{N-1}\}$ are computed by smoothing the spatial positions p of the object O. Smoothing the spatial positions p may be performed using a Savitzky-Golay filter.

From the smoothed spatial position, control points $(b_{3j}, b_{3j+1}, b_{3j+2}, b_{3j+3})$, $j \in \{0, ..., L-1\}$ are determined using De Boor's algorithm.

For each set $(b_{3j}, b_{3j+1}, b_{3j+2}, b_{3j+3})$, $j \in \{0, ..., L-1\}$, cubic Bezier curves are constructed which interpolate the set of the smoothed positions. Next, the partial curvatures $k_j$ are computed at the point $b_{3j+3}$ for each set $(b_{3j}, b_{3j+1}, b_{3j+2}, b_{3j+3})$, $j \in \{0, ..., L-1\}$, taking into consideration the value of the first and second derivative based on the control points. The curvature K for all spatial points p is calculated using the following formula:

$$K = t \cdot k_j + (1-t) \cdot K,$$

where are predetermined value t is chosen, where $t \in [0,1]$.

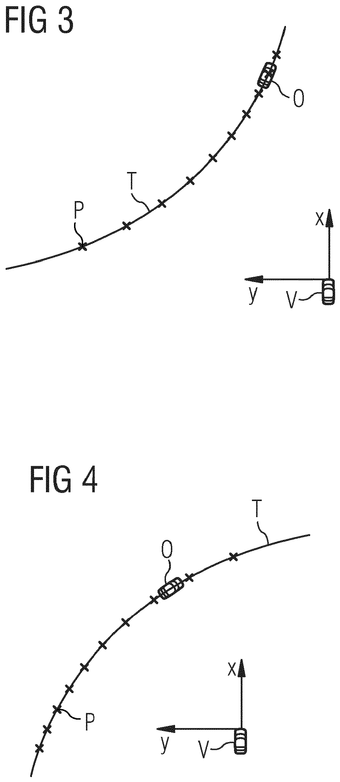

In figure 3, an illustrative scenario is shown. The vehicle V is moving along the x-axis, i.e. has a positive velocity component along the x-axis and zero velocity along the y-axis. The object O has a positive component of velocity $v_x$ along the trajectory of the vehicle V, i.e., along the x-axis. In other words, $v_x > 0$. Further, $v_y < 0$, i.e., the object O is moving towards the trajectory of the vehicle V. Moreover, the evaluation unit 3 has determined that the curvature is greater than or equal to zero, $K \geq 0$. Depending on the sensor data, the evaluation unit 3 determines a time to collision. For example, the time to collision may be determined based on radar data.

The evaluation unit 3 is adapted to modify the determined time to collision based on the curvature K of the approximated trajectory T.

In a first scenario, the curvature K is greater than or equal to zero and less than a predetermined positive first curvature threshold $K_{min}^+$, i.e., $K \in [0, K_{min}^+)$. In this case, the object O is rapidly approaching the trajectory of the vehicle V and the time to collision remains unchanged or is only slightly reduced.

In a second scenario, the curvature K is greater than or equal to the first curvature threshold $K_{min}^+$ and less than a predetermined positive second curvature threshold $K_{max}^+$, i.e., $K \in [K_{min}^+, K_{max}^+)$. In this case, the time to collision is reduced by the evaluation unit 3 because a collision is less likely.

In a third scenario, the curvature K is greater than or equal to the second curvature threshold $K_{max}^+$, i.e., $K \geq K_{max}^+$. In this case, the object O has the tendency to move parallel to the vehicle V and a collision is very unlikely. Accordingly, the time to collision is strongly reduced. The time to collision can be modified according to the following formula:

$$TTC(K) = TTC_0 \cdot Factor(K),$$

where TTC(K) denotes the time to collision depending on the curvature K, $TTC_0$ denotes the time to collision obtained solely based on the sensor data, and Factor(K) is given by the following formula:

$$Factor(K) = \begin{cases} \exp(K) & K \in [0, K_{min}^+) \\ 1 - 0.1 * \frac{K - K_{min}^+}{K_{max}^+ - K_{min}^+} & K \in [K_{min}^+, K_{max}^+) \\ \exp(-K) & K \in [K_{max}^+, +\infty) \end{cases}$$

Accordingly, the time to collision is multiplied by an exponential factor involving the curvature K of the approximated trajectory T, if the curvature lies within a predetermined interval.

In figure 4, a further illustrative scenario is shown which differs from the scenario illustrated in figure 3 in that the evaluation unit 3 has determined that the curvature K is smaller than zero, K < 0.

In a first scenario, the curvature is less than zero and greater than a predetermined negative third curvature threshold $K_{max}^-$, i.e., $K \in (K_{max}^-, 0)$. In this case, the object O is rapidly approaching the trajectory of the vehicle V and the evaluation unit 3 leaves the time to collision, i.e., keeps the time to collision at the value determined based on the sensor data.

In a second scenario, the curvature is less than or equal to the third curvature threshold $K_{max}^-$, i.e., $K \leq K_{max}^-$. In this scenario, the object O is even more rapidly approaching the trajectory of the vehicle V and the time to collision is left unchanged.

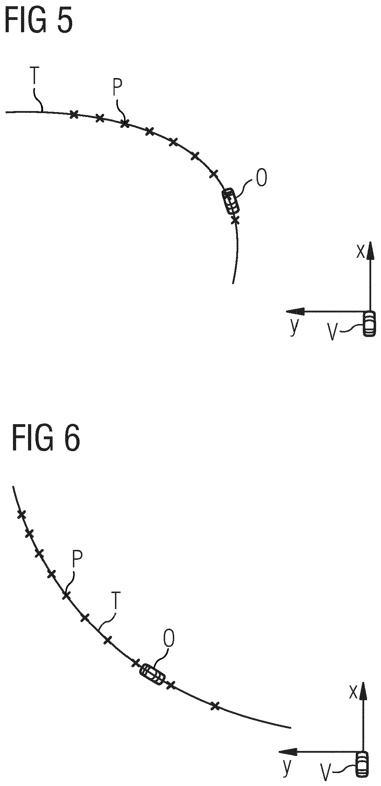

In figure 5, a further illustrative scenario is shown, where the object O has a component of velocity $v_x$ anti-parallel to the trajectory of the vehicle V, i.e. $v_x < 0$. Further, $v_y < 0$, i.e., the object O is moving towards the trajectory of the vehicle V. Moreover, the evaluation unit 3 has determined that the curvature is less than or equal to zero, $K \leq 0$.

In a first scenario, the curvature K is greater than the third curvature threshold $K_{max}^-$ and less than or equal to zero, $K \in (K_{max}^-, 0]$. In this case, the object O is approaching the trajectory of the vehicle V almost on a straight line and the time to collision is left unchanged or is only slightly reduced.

In a second scenario, the curvature K is less than or equal to the third curvature threshold $K_{max}^-$, and greater than a predetermined negative fourth curvature threshold $K_{min}^-$, i.e., $K \in (K_{min}^-, K_{max}^-]$. In this case, the time to collision is reduced because a collision is less likely.

In a third scenario, the curvature is smaller than or equal to the fourth curvature threshold $K \leq K_{min}^-$. In this case, the object O has tendency to move parallel to the vehicle V and a collision is very unlikely. Accordingly, the time to collision is strongly reduced. The time to collision can be modified according to the following formula:

$$TTC(K) = TTC_0 \cdot Factor(K),$$

where TTC(K) denotes the time to collision depending on the curvature K, $TTC_0$ denotes the time to collision obtained based on the sensor data, and Factor(K) is given by the following formula:

$$Factor(K) = \begin{cases} \exp(-K) & K \in (K_{max}^-, 0] \\ 1 - 0.1 * \frac{K - K_{max}^-}{K_{min}^- - K_{max}^-} & K \in (K_{min}^-, K_{max}^-] \\ \exp(K) & K \in [-\infty, K_{max}^+) \end{cases}$$

In figure 6, a further illustrative scenario is shown which differs from the scenario illustrated in figure 5 in that the curvature K has been determined to be greater than zero, $K > 0$.

In a first scenario, the curvature K is greater than zero and smaller than the first curvature threshold, $K \in [0, K_{min}^+)$. In this case, the object O is approaching the trajectory of the vehicle V and the time to collision remains unchanged.

In a second scenario, the curvature K is greater than or equal to the first curvature threshold, $K \geq K_{min}^+$. In this scenario, the object O is even more rapidly approaching the trajectory of the vehicle V and the time to collision is left unchanged.

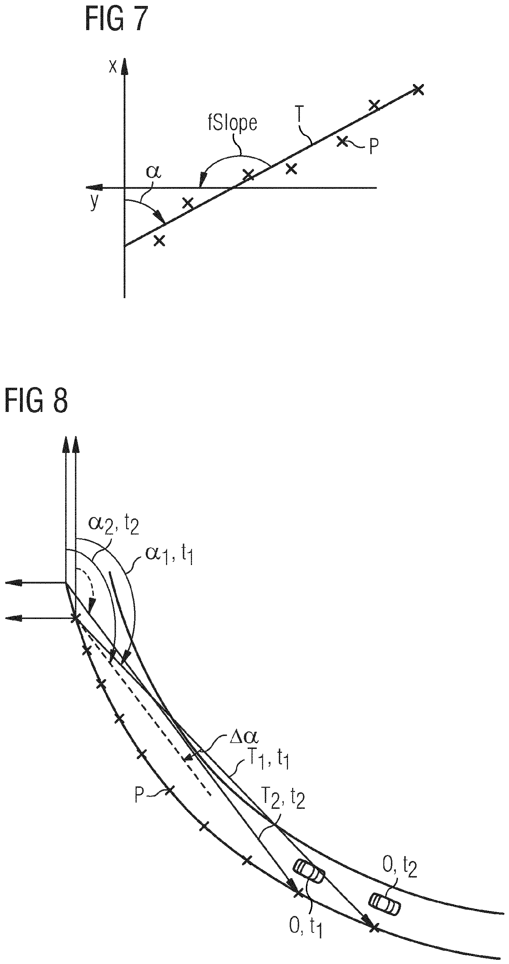

According to a further embodiment, the approximated trajectory T is constructed as a regression line through the spatial positions p, as illustrated in figure 7. The slope fSlope of the regression line is computed according to the following formula:

$$fSlope = \frac{N \sum_{i=1}^{N} x_i y_i - (\sum_{i=1}^{N} x_i)(\sum_{i=1}^{N} y_i)}{N \sum_{i=1}^{N} y_i^2 - (\sum_{i=1}^{N} y_i)^2}$$

In this formula, N denotes the number of spatial positions p and $x_i$ and $y_i$ denote the longitudinal coordinate and lateral coordinate, respectively, for each position p.

Further, the target angle $\alpha$ denotes the angle between the regression line and the x-axis. The slope fSlope and the target angle $\alpha$ differ by 90°.

The detection of a possible collision of the object O with the vehicle V is now determined based on the target angle $\alpha$ of the approximated trajectory T. Further, if the value of the target angle $\alpha$ lies within a predetermined interval chosen around 0° or within a predetermined interval chosen around 180°, it is predicted that there is no possible collision of the vehicle V with the object O, because the object O is moving almost in parallel with the vehicle V.

In contrast, if the value of the target angle $\alpha$ significantly differs from a value of 0° or 180°, a further analysis is performed in order to determine whether there is a possible collision of the vehicle V with the object O.

Figure 8 shows an illustrative scenario. The target angle $\alpha$ is computed for respective regression lines $T_1$, $T_2$ at two different time points $t_1$ and $t_2$. For each time point, the last N spatial positions p are used in order to determine the respective regression lines $T_1$, $T_2$. Now, the difference angle $\Delta\alpha$ between the target angles $\alpha_1$, $\alpha_2$ at the respective time points $t_1$, $t_2$ is computed according to the following formula:

$$\Delta\alpha \ = \ \alpha_2 \ - \ \alpha_1 \ < \ 0$$

Further, an indicator fGradientTargetAngle is determined according to the following formula:

$$\texttt{fGradientTargetAngle = arctg}(\Delta\alpha \ / \ \texttt{T}),$$

where T is the cycle time of the radar sensor.

Based on the indicator fGradientTargetAngle, the evaluation unit 3 may be adapted to predict a possible collision of the vehicle V with the object O.

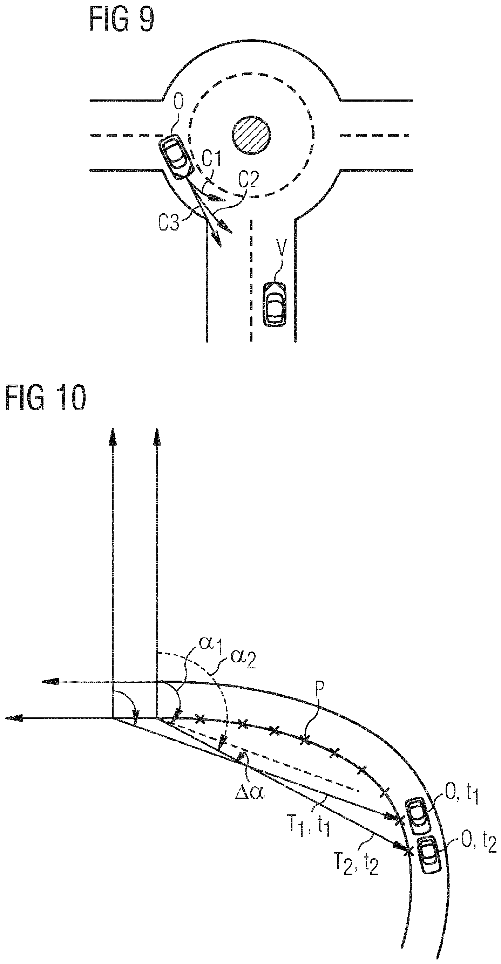

For example, as illustrated in figure 9, the object O may be another vehicle V which is driving in a roundabout. If the indicator fGradientTargetAngle is greater than or equal to a predetermined positive first value, it is determined that the object O is following a sharp curve and stays within the roundabout. It is determined that there is no possible collision of the vehicle V with the object O. This correspond to scenario c1 in figure 9.

If it is concluded that the indicator fGradientTargetAngle is smaller than the first predetermined value but greater than or equal to a predetermined positive second value, it is determined that the object O follows a slight curve. In this case, it is determined that there is a possible collision between the object O and the vehicle V which corresponds to scenario c2.

If the indicator fGradientTargetAngle is smaller than the second value and greater than 0, it is determined that the object O is following almost a straight line and a possible collision is predicted. This corresponds to scenario c3.

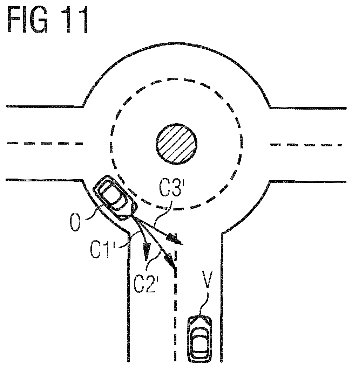

The invention can also be used to determine if the vehicle V is exiting the roundabout. In figure 10, the respective regression lines $T_1$, $T_2$ of the object O are depicted at two different time points $t_1$, $t_2$. Figure 11 shows an illustrative scenario. If it is determined that the indicator fGradientTargetAngle is smaller than a predetermined negative third value, it is determined that the object O follows a sharp curve and correspondingly is exiting the roundabout, corresponding to scenario c1'. It is predicted that there is no collision.

If the indicator fGradientTargetAngle is greater than the third value and less than or equal to a predetermined negative fourth value, it is determined that the object O is following a slight curve, corresponding to scenario c2'. In this case, a possible collision of the vehicle V with the object O is predicted.

If it is determined that the indicator fGradientTargetAngle is greater than the fourth value and smaller than or equal to zero it is determined that the object O is following almost a straight line and a possible collision is predicted, corresponding to scenario c3'.

According to a further embodiment, the spatial positions p of the object O can also be determined relative to a vehicle-fixed coordinate system, i.e., the spatial positions p are determined relative to a coordinate system where the vehicle V is in the center and where preferably the x-axis is pointing along the movement direction of the vehicle V.

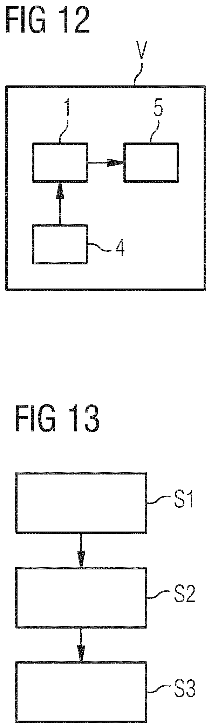

Figure 12 shows a block diagram of a vehicle V according to an embodiment of the invention. The vehicle V comprises a sensor system 4 which is adapted to provide sensor data of a surrounding of the vehicle V. The sensor system 4 may comprise a radar system, vehicle cameras or infrared sensors.

Further, the vehicle V comprises a device 1 for predicting a possible collision of the vehicle V with a moving object O. The device 1 is arranged according to one of the embodiments described above.

The vehicle V further comprises a control unit 5 which is adapted to control a movement of the vehicle V if a possible collision of the vehicle V with an object O has been predicted. For example, the control unit 5 can be adapted to slow down the vehicle V or to steer the vehicle V away from the object O.

Figure 13 shows a flowchart of a method for detecting a possible collision of a vehicle V with a moving object O according to an embodiment of the invention.

In a first step S1, spatial positions p of the object O are determined for a series of time points based on sensor data obtained by the vehicle V.

In a second step, an approximated trajectory T of the object O is constructed by approximating the spatial positions p of the object O. The approximated trajectory T may be constructed using polynomial regression or using De Boor's algorithm, as explained in detail above.

In a further step S3, a possible collision of the vehicle V with the object O is predicted based on the approximated trajectory T of the object O and/or based on a time dependence of the approximated trajectory T of the object O. The prediction can be performed according to one of the above mentioned methods. For example, a time to collision may be determined based on the sensor data obtained by the sensor system 4, and by modifying the time to collision based on the approximated trajectory T and/or based on the time dependence of the approximated trajectory T. In particular, the time to collision can be multiplied by an exponential factor which involves a curvature of the approximated trajectory T.

Further, a probability for a collision of the vehicle V with the object O can be computed based on the approximated trajectory T.

REFERENCE SIGNS

| | |
|---|---|
| 1 | device |
| 2 | interface |
| 3 | evaluation unit |
| 4 | sensor system |
| 5 | control unit |
| fSlope | slope of the regression line |
| O | object |
| p | spatial position |
| T | trajectory |
| V | vehicle |
| $\alpha$ | target angle |

**Claims**

1. A method for detecting a possible collision of a vehicle (V) with a moving object (O), comprising the steps:

   determining (S1) spatial positions (p) of the object (O) for a series of time points based on sensor data obtained by the vehicle (V);
   constructing (S2) an approximated trajectory (T) of the object (O) by approximating the spatial positions (p) of the object (O); and
   predicting (S3) a possible collision of the vehicle (V) with the object (O) based on the approximated trajectory (T) of the object (O) and/or based on a time-dependence of the approximated trajectory (T) of the object (O), wherein a possible collision of the vehicle (V) with the object (O) is predicted based on a curvature (K) of the approximated trajectory (T) of the object (O).

2. The method according to claim 1, wherein constructing the approximated trajectory (T) comprises the following steps:

   computing smoothed positions (p) by smoothing the spatial positions (p) of the object (O); and
   constructing the approximated trajectory (T) as an interpolated curve for the smoothed positions (p) using De Boor's algorithm.

3. The method according to claim 2, wherein smoothing the spatial positions (p) is performed using a Savitzky-Golay filter.

4. The method according to any of the preceding claims,
   wherein the approximated trajectory (T) is constructed using polynomial regression.

5. The method according to any of the preceding claims,

wherein the approximated trajectory (T) is constructed as a regression line through the spatial positions (p), and wherein a possible collision of the vehicle (V) with the object (O) is predicted based on a time-dependence of a slope of the regression line.

6. The method according to any of the preceding claims,
wherein a time to collision (tc) is determined based on the sensor data, and wherein the time to collision (tc) is modified based on the approximated trajectory (T) and/or based on the time-dependence of the approximated trajectory (T) .

7. The method according to claim 6, wherein modifying the time to collision (tc) comprises multiplying the time to collision (tc) by an exponential factor involving the curvature (K) of the approximated trajectory (T) if the curvature (K) of the approximated trajectory (T) lies within a predetermined interval.

8. The method according to any of the preceding claims,
wherein a probability for a collision of the vehicle (V) with the object (O) is computed based on the approximated trajectory (T) and/or based on a time dependence of the approximated trajectory.

9. The method according to any of the preceding claims,
wherein a movement of the vehicle (V) is controlled if a possible collision of the vehicle (V) with the object (O) has been predicted.

10. A device (1) for detecting a possible collision of a vehicle (V) with a moving object (O), comprising:

   an interface (2) adapted to receive sensor data obtained by the vehicle (V);
   an evaluation unit (3), adapted to

      - determine spatial positions (p) of the object (O) for a series of time points based on the received sensor data;
      - construct an approximated trajectory (T) of the object (O) by approximating the spatial positions (p) of the object (O); and
      - predict a possible collision of the vehicle (V) with the object (O) based on the approximated trajectory of the object (O) and/or based on a time-dependence of the approximated trajectory of the object (O), wherein a possible collision of the vehicle (V) with the object (O) is predicted based on a curvature (K) of the approximated trajectory (T) of the object (O).

11. The device (1) according to claim 10, wherein the
evaluation unit (3) is adapted to construct the approximated trajectory (T) using polynomial regression.

12. The device (1) according to claims 10 or 11, wherein the
evaluation unit (3) is further adapted to determine a time to collision (tc) based on the sensor data, and to modify the time to collision (tc) based on the approximated trajectory (T).

13. A vehicle (V), comprising

   a sensor system (4) adapted to provide sensor data of a surrounding of the vehicle (V); and
   a device (1) according to any of claims 10 to 12, for predicting a possible collision of the vehicle (V) with a moving object (O), based on the provided sensor data.

14. The vehicle (V) according to claim 13, comprising a
control unit (5) which is adapted to control a movement of the vehicle (V) if a possible collision of the vehicle (V) with an object (O) has been predicted.


**Patentansprüche**

1. Verfahren zum Detektieren einer möglichen Kollision eines Fahrzeugs (V) mit einem bewegten Objekt (O), das die folgenden Schritte aufweist:

   Bestimmen (S1) räumlicher Positionen (p) des Objekts (O) für eine Reihe von Zeitpunkten auf der Grundlage von Sensordaten, die durch das Fahrzeug (V) erhalten werden;

Konstruieren (S2) einer approximierten Bahn (T) des Objekts (O) durch Annähern der räumlichen Positionen (p) des Objekts (O) und

Vorhersagen (S3) einer möglichen Kollision des Fahrzeugs (V) mit dem Objekt (O) auf der Grundlage der approximierten Bahn (T) des Objekts (O) und/oder auf der Grundlage einer Zeitabhängigkeit der approximierten Bahn (T) des Objekts (O), wobei eine mögliche Kollision des Fahrzeugs (V) mit dem Objekt (O) auf der Grundlage einer Krümmung (K) der approximierten Bahn (T) des Objekts (O) vorausgesagt wird.

2. Verfahren nach Anspruch 1, wobei das Konstruieren der approximierten Bahn (T) die folgenden Schritte aufweist:

Berechnen geglätteter Positionen (p) durch Glätten der räumlichen Positionen (p) des Objekts (O) und

Konstruieren der approximierten Bahn (T) als eine interpolierte Kurve für die geglätteten Positionen (p) unter Verwendung des de Boor'schen Algorithmus.

3. Verfahren nach Anspruch 2, wobei das Glätten der räumlichen Positionen (p) unter Verwendung eines Savitzky-Golay-Filters durchgeführt wird.

4. Verfahren nach einem der vorhergehenden Ansprüche, wobei die approximierte Bahn (T) unter Verwendung einer Polynomregression konstruiert wird.

5. Verfahren nach einem der vorhergehenden Ansprüche, wobei die approximierte Bahn (T) als eine Regressionsgerade über die räumlichen Positionen (p) konstruiert wird und eine mögliche Kollision des Fahrzeugs (V) mit dem Objekt (O) auf der Grundlage einer Zeitabhängigkeit einer Steigung der Regressionsgerade vorausgesagt wird.

6. Verfahren nach einem der vorhergehenden Ansprüche, wobei eine Zeit bis zur Kollision (tc) auf der Grundlage der Sensordaten bestimmt wird und die Zeit bis zur Kollision (tc) auf der Grundlage der approximierten Bahn (T) und/oder auf der Grundlage der Zeitabhängigkeit der approximierten Bahn (T) geändert wird.

7. Verfahren nach Anspruch 6, wobei das Modifizieren der Zeit bis zur Kollision (tc) ein Multiplizieren der Zeit bis zur Kollision (tc) mit einem Exponentialfaktor, der die Krümmung (K) der approximierten Bahn (T) einbezieht, aufweist, wenn die Krümmung (K) der approximierten Bahn (T) in einem vorgegebenen Intervall liegt.

8. Verfahren nach einem der vorhergehenden Ansprüche, wobei eine Wahrscheinlichkeit für eine Kollision des Fahrzeugs (V) mit dem Objekt (O) auf der Grundlage der approximierten Bahn (T) und/oder auf der Grundlage einer Zeitabhängigkeit der approximierten Bahn berechnet wird.

9. Verfahren nach einem der vorhergehenden Ansprüche, wobei eine Bewegung des Fahrzeugs (V) gesteuert wird, wenn eine mögliche Kollision des Fahrzeugs (V) mit dem Objekt (O) vorausgesagt wurde.

10. Vorrichtung (1) zum Detektieren einer möglichen Kollision eines Fahrzeugs (V) mit einem bewegten Objekt (O), die Folgendes aufweist:

eine Schnittstelle (2), die ausgelegt ist, Sensordaten, die durch das Fahrzeug (V) erhalten werden, aufzunehmen; und

eine Bewertungseinheit (3), die ausgelegt ist zum

- Bestimmen räumlicher Positionen (p) des Objekts (O) für eine Reihe von Zeitpunkten auf der Grundlage der empfangenen Sensordaten;

- Konstruieren einer approximierten Bahn (T) des Objekts (O) durch Annähern der räumlichen Positionen (p) des Objekts (O) und

- Vorhersagen einer möglichen Kollision des Fahrzeugs (V) mit dem Objekt (O) auf der Grundlage der approximierten Bahn des Objekts (O) und/oder auf der Grundlage einer Zeitabhängigkeit der approximierten Bahn des Objekts (O), wobei eine mögliche Kollision des Fahrzeugs (V) mit dem Objekt (O) auf der Grundlage einer Krümmung (K) der approximierten Bahn (T) des Objekts (O) vorausgesagt wird.

11. Vorrichtung (1) nach Anspruch 10, wobei die Bewertungseinheit (3) ausgelegt ist, die approximierte Bahn (T) unter Verwendung einer Polynomregression zu konstruieren.

**12.** Vorrichtung (1) nach Anspruch 10 oder 11, wobei die Bewertungseinheit (3) ferner ausgelegt ist, eine Zeit bis zur Kollision (tc) auf der Grundlage der Sensordaten zu bestimmen und die Zeit bis zur Kollision (tc) auf der Grundlage der approximierten Bahn (T) zu modifizieren.

**13.** Fahrzeug (V), das Folgendes aufweist:

ein Sensorsystem (4), das ausgelegt ist, Sensordaten einer Umgebung des Fahrzeugs (V) bereitzustellen; und eine Vorrichtung (1) nach einem der Ansprüche 10 bis 12 zum Vorhersagen einer möglichen Kollision des Fahrzeugs (V) mit einem bewegten Objekt (O) auf der Grundlage der bereitgestellten Sensordaten.

**14.** Fahrzeug (V) nach Anspruch 13, das eine Steuereinheit (5) aufweist, die ausgelegt ist, eine Bewegung des Fahrzeugs (V) zu steuern, wenn eine mögliche Kollision des Fahrzeugs (V) mit einem Objekt (O) vorausgesagt wurde.

**Revendications**

**1.** Procédé pour détecter une collision possible d'un véhicule (V) avec un objet (O) en mouvement, comportant les étapes consistant à :

déterminer (S1) des positions spatiales (p) de l'objet (O) pour une série d'instants d'après des données de capteurs obtenues par le véhicule (V) ;
construire (S2) une trajectoire approchée (T) de l'objet (O) par approximation des positions spatiales (p) de l'objet (O) ; et
prédire (S3) une collision possible du véhicule (V) avec l'objet (O) d'après la trajectoire approchée (T) de l'objet (O) et/ou d'après une dépendance par rapport au temps de la trajectoire approchée (T) de l'objet (O), une collision possible du véhicule (V) avec l'objet (O) étant prédite d'après une courbure (K) de la trajectoire approchée (T) de l'objet (O).

**2.** Procédé selon la revendication 1, la construction de la trajectoire approchée (T) comportant les étapes suivantes :

calcul de positions lissées (p) en lissant les positions spatiales (p) de l'objet (O) ; et
construction de la trajectoire approchée (T) comme une courbe interpolée pour les positions lissées (p) à l'aide de l'algorithme de De Boor.

**3.** Procédé selon la revendication 2, le lissage des positions spatiales (p) étant effectué à l'aide d'un filtre de Savitzky-Golay.

**4.** Procédé selon l'une quelconque des revendications précédentes, la trajectoire approchée (T) étant construite en utilisant une régression polynomiale.

**5.** Procédé selon l'une quelconque des revendications précédentes, la trajectoire approchée (T) étant construite comme une ligne de régression passant par les positions spatiales (p), et une collision possible du véhicule (V) avec l'objet (O) étant prédite d'après une dépendance par rapport au temps d'une pente de la ligne de régression.

**6.** Procédé selon l'une quelconque des revendications précédentes, un temps jusqu'à la collision (tc) étant déterminé d'après les données de capteurs, et le temps jusqu'à la collision (tc) étant modifié d'après la trajectoire approchée (T) et/ou d'après la dépendance par rapport au temps de la trajectoire approchée (T).

**7.** Procédé selon la revendication 6, la modification du temps jusqu'à la collision (tc) comportant le fait de multiplier le temps jusqu'à la collision (tc) par un facteur exponentiel faisant intervenir la courbure (K) de la trajectoire approchée (T) si la courbure (K) de la trajectoire approchée (T) se trouve à l'intérieur d'un intervalle prédéterminé.

**8.** Procédé selon l'une quelconque des revendications précédentes, une probabilité de collision du véhicule (V) avec l'objet (O) étant calculée d'après la trajectoire approchée (T) et/ou d'après une dépendance par rapport au temps de la trajectoire approchée.

**9.** Procédé selon l'une quelconque des revendications précédentes, un mouvement du véhicule (V) étant commandé si une collision possible du véhicule (V) avec l'objet (O) a été prédite.

**10.** Dispositif (1) destiné à détecter une collision possible d'un véhicule (V) avec un objet (O) en mouvement, comportant :

une interface (2) prévue pour recevoir des données de capteurs obtenues par le véhicule (V) ;
une unité (3) d'évaluation, prévue pour

- déterminer des positions spatiales (p) de l'objet (O) pour une série d'instants d'après les données de capteurs reçues ;
- construire une trajectoire approchée (T) de l'objet (O) par approximation des positions spatiales (p) de l'objet (O) ; et
- prédire une collision possible du véhicule (V) avec l'objet (O) d'après la trajectoire approchée de l'objet (O) et/ou d'après une dépendance par rapport au temps de la trajectoire approchée de l'objet (O), une collision possible du véhicule (V) avec l'objet (O) étant prédite d'après une courbure (K) de la trajectoire approchée (T) de l'objet (O).

**11.** Dispositif (1) selon la revendication 10, l'unité (3) d'évaluation étant prévue pour construire la trajectoire approchée (T) en utilisant une régression polynomiale.

**12.** Dispositif (1) selon les revendications 10 ou 11, l'unité (3) d'évaluation étant en outre prévue pour déterminer un temps jusqu'à la collision (tc) d'après les données de capteurs, et pour modifier le temps jusqu'à la collision (tc) d'après la trajectoire approchée (T).

**13.** Véhicule (V), comportant un système (4) de capteurs prévu pour fournir des données de capteurs d'un voisinage du véhicule (V) ; et
un dispositif (1) selon l'une quelconque des revendications 10 à 12, destiné à prédire une collision possible du véhicule (V) avec un objet (O) en mouvement, d'après les données de capteurs fournies.

**14.** Véhicule (V) selon la revendication 13, comportant une unité (5) de commande qui est prévue pour commander un mouvement du véhicule (V) si une collision possible du véhicule (V) avec un objet (O) a été prédite.

FIG 1

FIG 2

FIG 3

FIG 4

**FIG 5**

**FIG 6**

## FIG 7

## FIG 8

## FIG 9

## FIG 10

FIG 11

FIG 12

FIG 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013121357 A1
- US 2003220728 A1
- US 2002044081 A1
- US 6615138 B1
- JP 2008222164 A

- US 2016101779 A1
- US 2012313806 A1
- US 20150183431 A1
- US 2016039413 A1